# EUROPEAN PATENT SPECIFICATION

(11) **EP 1 400 709 B1**
(45) Date of publication and mention of the grant of the patent: **31.05.2006**
(21) Application number: 03020383.0
(22) Date of filing: 10.09.2003
(51) Int. Cl.: F16B 37/08, F16L 3/23

(54) **A device for mounting a component such as a pipe on a stud**
Vorrichtung zum Montieren eines Bauelementes wie ein Rohr auf einen Bolzen
Dispositif pour le montage d'un composant comme un tuyau sur un goujon

(30) Priority: 19.09.2002 JP 2002272668
(43) Date of publication of application: 24.03.2004
(73) Proprietor: Newfrey LLC, Newark, Delaware 19711 (US)
(72) Inventor: Kanie, Hideki, Toyohashi-shi Aichi-ken (JP)
(74) Representative: Haar, Lucas Heinz Jörn

(56) References cited:
- EP-A- 0 751 597
- EP-A- 0 759 523
- US-B1- 6 185 792
- US-B1- 6 240 602

## Description

This invention relates to a device for mounting components, such as pipes, on a stud.

Prior devices for attaching a component to a threaded stud, welded to the body of an automobile, for example, have a bore into which the stud is inserted to engage pawls that fasten the device to the stud. In one such device, the orientation of the pawls in the bore is fixed, which restricts insertion of the stud into the bore to a single direction.

Japanese Unexamined Patent Application Publication No. 9-159061 discloses a device for attaching a component to a stud, in which the stud can be inserted into a bore from either end. Flexible fingers having thread-engaging protrusions bend from hinge sections when a stud is inserted into the bore. However the fingers are bent nearly 90° from the hinge sections, and as a result a large insertion force is required to insert the stud. Also, because the retention force is limited by the thin sections, the attachment of the device to the stud is weak.

The device of the later published European publication No. EP-A-1 387 094 of the applicant permits the easy insertion of a stud into the bore of an attachment device from either direction and is capable of a secure attachment. One embodiment disclosed in the prior application, has a pair of pawls, but as mentioned in that application, the number of pawls is not limited to two.

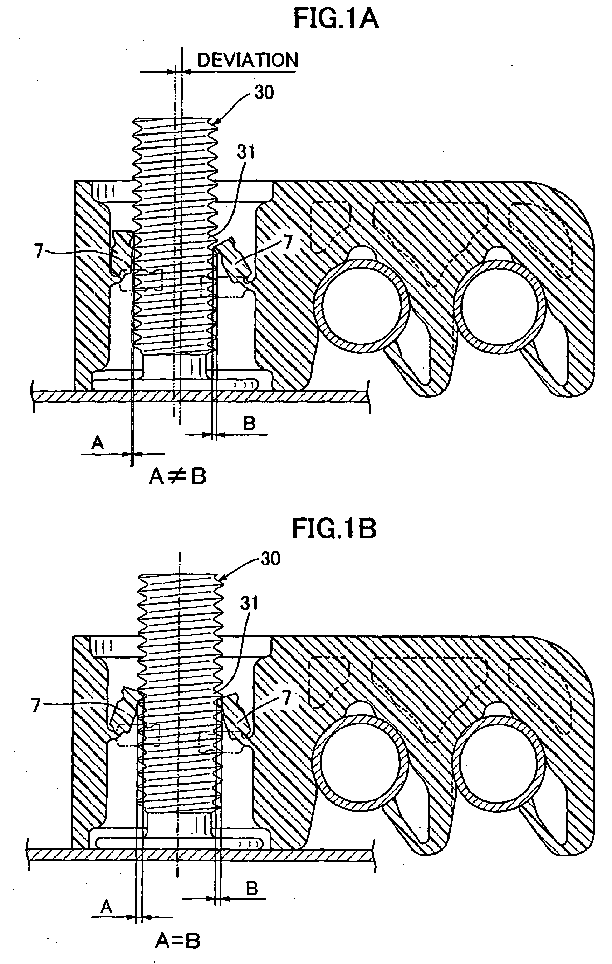

Figs. 1A and 1B show a two-pawl embodiment of the above-identified prior application. Fig. 1A shows a situation in which a stud 30 is inserted into the bore of the attachment device with some lateral deviation between the axis of the stud and the axis of the bore, while Fig. 1B shows a situation in which there is little or no deviation. In Fig. 1A, the two pawls 7 are oriented asymmetrically with respect to the stud, so that the extent of engagement of the pawls with the threads 31 of the stud (A in one case and B in the other case) is unequal, and slippage between the stud and the pawls is more likely to occur than in the situation shown in Fig. 1B, where the pawls 7 are equally engaged with the threads 31 of the stud (i.e., A=B). Indeed, in Fig. 1A the pawl 7 at the left of the figure has become almost ineffective in restraining the slippage of the attachment device along the stud 30.

The present invention makes use of only a single pawl in a manner that minimizes slippage. A device for mounting a component on a stud, in which the stud can be inserted into a bore of the device from either end, and in which a single pawl provides attachment of the device to the stud is disclosed in US-B1-6 240 602. In this known device the bore for receiving the stud comprises two diametrically opposed slots one of which contains the pawl. Thus the pawl presses the stud into the slot opposite the pawl so that the stud is moved laterally and is only retained by the edges formed by the bore and the slot opposite the pawl. As a result, there is a possibility of significant lateral movement of the stud in a radial direction between the slots.

An object of the present invention is to provide a device for mounting a component on a stud, in which the stud can be inserted into a bore of the device from either end, with a small insertion force, and in which a single pawl provides attachment of the device to the stud that is strong and reliable. It is further an object of the present invention to provide a device for mounting a component on a stud, wherein the lateral movement of the device in relation to the stud is restricted.

According to the present invention there is provided a device to be fastened to a threaded stud, in particular for mounting a component on a threaded stud, comprising a body having a bore for insertion of the stud and a single pawl connected by a hinge to a first inner wall of the bore,wherein the pawl has a centerline which, in the absence of a stud in the bore, extends in a first direction substantially perpendicular to the axis of the bore, wherein the pawl can be bent in opposite directions at the hinge for mounting the device on a stud from two directions, wherein a thread engaging section is formed at an end of the pawl opposite the hinge, the engaging section being disposed for entering a space between crests of threads of a stud upon insertion of the stud in the bore, wherein the bore comprises a second inner wall that extends continuously around the circumference of the bore except for the location of the first inner wall to which the pawl is attached by the hinge, wherein the radius of the second inner wall is smaller than the radius of the first inner wall and the second inner wall is constructed to closely surround the stud and to minimize lateral movement of the stud in the first direction, and in a direction orthogonal to the first direction.

Briefly stated, an embodiment of a device according to the present invention employs a single pawl having a thick section extending from a thin section forming a hinge that connects the pawl to a wall of the bore. Thread engaging sections for engaging the threads of the stud are formed at an end of the thick section of the pawl. One of the engaging sections engages threads of the stud by insertion in a space between crests of the threads of the stud when the stud is inserted in the bore from one direction, and the other engaging section similarly engages threads of the stud when the stud is inserted in the bore from the opposite direction. Grooves are formed on the pawl near respective engaging sections for accommodating one of the thread crests. One of the grooves is used when the stud is inserted into the bore from one direction, and the other groove is used when the stud is inserted into the bore from the opposite direction.

The invention will be further described in conjunction with the accompanying drawings, which illustrate a preferred (best mode) embodiment of the invention, and wherein:
Figs. 1 A and 1B are sectional views of a two-pawl device;
Fig. 2A is a plan view of a single-pawl device according to the invention;
Fig. 2B is a side view of the single-pawl device;
Fig. 2C is a plan view of the single-pawl device as seen from a direction opposite to that of Fig. 2A;
Fig. 2D is a fragmentary sectional view taken along line A-A in Fig. 2A;
Fig. 2E is an enlarged sectional view of a portion designated in Fig. 2D by a circle C;
Fig. 3 is an enlarged fragmentary sectional view showing engagement of the pawl with threads of the stud;
Figs. 4A and 4B are diagrammatic plan views illustrating the extent to which lateral movement of a stud in a bore can occur in a single-pawl device (Fig. 4A) and in a two-pawl device (Fig. 4B);
Fig. 5 is a sectional view showing a device of the invention with a stud inserted into a bore of the device from one end; and
Fig. 6 is a sectional view showing a device of the invention with a stud inserted into the bore from the opposite end.

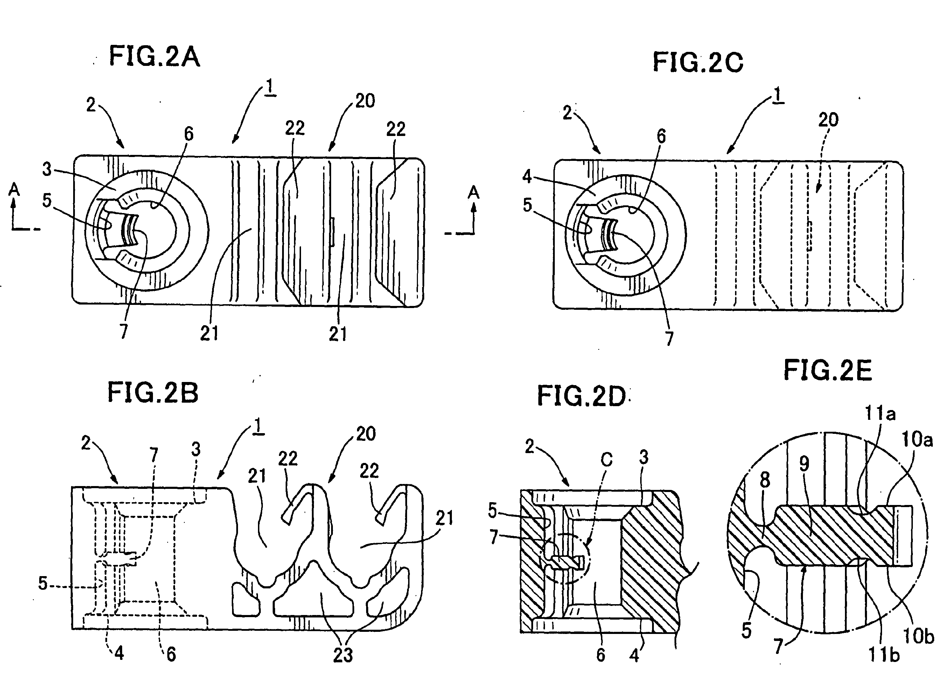

An embodiment of the invention shown in Figs. 2A-2E, 3, 5 and 6 of the drawings comprises a device 1 having a main body section 2 and a component mounting section 20 for attaching a component such as a pipe or dash silencer to a threaded stud 30. In the form shown, the upper and lower surfaces of the main body section 2 are nearly flat, and dish shaped recesses 3 and 4 are formed in the upper and lower surfaces to accommodate a widened base of the stud. A bore is formed in the main body section 2. The stud 30 is inserted into the bore from either end to attach the device 1 to the stud.

A single pawl 7 extends from an inner wall 5 of the bore of the main body section 2 substantially perpendicular to the axis of the bore, as shown in Figs. 2D and 2E.

As shown in Fig. 2E, adjacent to the inner wall 5 of the bore, the pawl 7 has a flexible thin section 8 forming a hinge that permits the pawl 7 to bend from the thin section 8 in either axial direction of the bore. The thin section 8 supports a thick section 9, which, in the form shown, is nearly flat on its side surfaces facing the ends of the bore. The thick section 9 is more rigid and more difficult to bend than the thin section 8.

Thread engaging sections 10a,b are formed at the end of the thick section 9 to engage threads 31 on the stud 30. Engaging section 10a is formed at one side of the pawl 7, and engaging section 10b is formed at the opposite side. As shown in Figs. 2A and 2C, the tips of the engaging sections 10a,b of pawl 7 are arcuate so as to conform to the curvature of the threads 31.

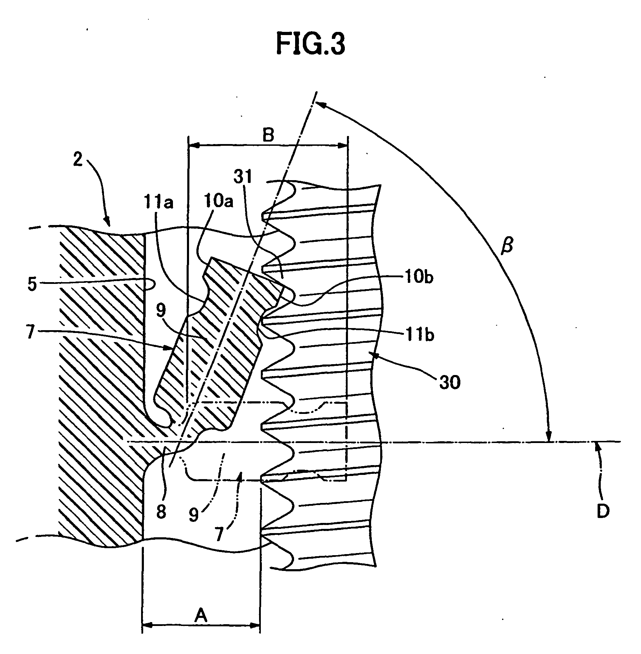

As shown in Fig. 2E, a threading groove 11 a is formed near engaging section 10a, and a threading groove 11b is formed near engaging section 10b. As shown in Fig. 3, when an engaging section (e.g., 10b) engages threads of the stud 30, it enters a space between successive crests of the threads and one of the crests is received by one of the grooves (e.g., 11b). The threading grooves 11a,b keep crests of the threads from coming into contact with the sides of thick section 9 and allow the engaging sections to approach the root of the threads. The threading grooves 11a,b are arcuate so as to conform to the curvature of the threads 31.

As shown in Figs. 2A, 2C, 2D, there is an inner wall 6 of the bore that extends around the circumference of the bore except for the location of an inner wall 5 to which the pawl 7 is attached by the thin section 8. The radius of inner wall 6 is smaller than the radius of inner wall 5. The inner diameter of inner wall 6 is slightly larger than the outer diameter of the stud 30. Because there is only a single pawl 7, the inner wall 6 can, to a major extent, closely surround the stud. Because there is only a slight space between the inner wall 6 and the stud 30, there can be only a little lateral movement of the stud 30 in the bore, as set forth later.

The component mounting section 20 is used to mount a component such as a pipe. In this example, recesses 21 (see Fig. 2B) are formed in the component mounting section 20 to accommodate the pipes. Resilient retainers 22 formed in the component mounting section 20 hold the components in the mounting section. Hollow sections 23 may be formed below the recesses 21 to reduce the weight of the device.

Fig. 3 shows the pawl 7 when the device 1 has been mounted on a stud 30. Before the device is mounted on the stud, the centerline D of the pawl 7 extends in a direction substantially perpendicular to the axis of the bore. See the dotted line position of pawl 7. When the stud 30 is inserted into the bore from one end, the pawl 7 is pressed against threads 31 of the stud 30 and bends toward the opposite end of the bore. When the device 1 has been mounted on the stud, the centerline of the pawl 7 extends in a direction that forms an angle β substantially less than 90° with respect to the initial direction of the centerline D of the pawl 7 before mounting.

In the form shown in Fig. 3, the length of the thick section 9 of the pawl 7 is B. Also, the distance between the inner wall 5 and the stud 30 is A. The length B of the thick section 9 of the pawl 7 is a constant substantially greater than A. If the difference between B and A were small, the device 1 would tend to come off the stud 30.

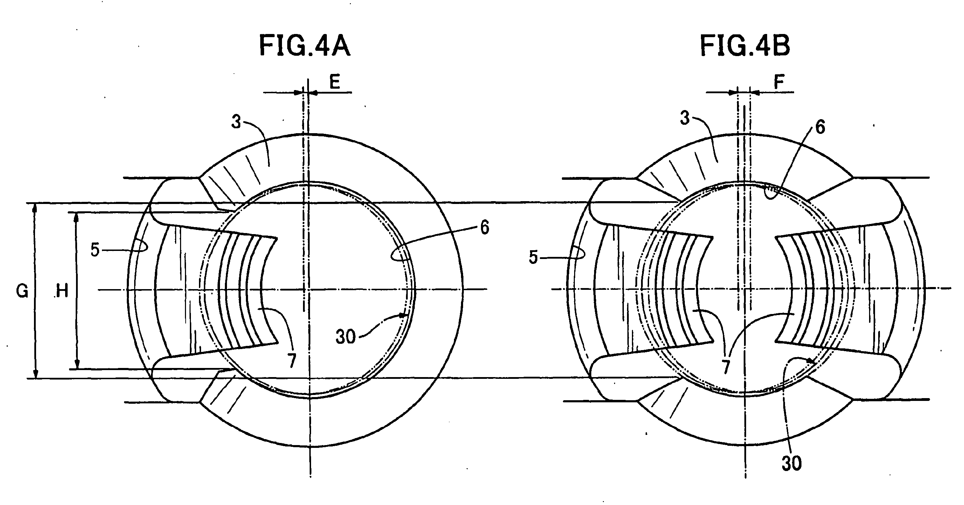

Figs. 4A and 4B are simplified diagrams showing, comparatively, the extent to which lateral movement of the stud in the bore can occur in single-pawl and two-pawl devices. Fig. 4A shows the extent E of lateral movement along a direction between pawl 7 and an opposite wall 6 (referred to as a first direction) when there is only a single pawl 7, as in an embodiment of the present invention. Fig. 4B shows the extent F of lateral movement along the same first direction when there are two pawls 7, as shown in an embodiment in the aforementioned prior application.

In Fig. 4B, the inner wall 6 is discontinuous on opposite sides of the bore where the pawls 7 are mounted. As a result, there is a possibility of significant lateral movement of stud 30 in the first direction between the pawls, with consequences discussed earlier in connection with Fig. 1A. In Fig. 4A the inner wall 6 is continuous except where the single pawl 7 is mounted, and the pawl presses the stud 30 against the inner wall 6 at the side of the bore opposite to the pawl 7. As a result, there can be very little movement of the stud in the first direction between the pawl and the inner wall 6.

As is apparent in Fig. 4B, sections of the inner wall 6 restrict lateral movement of the stud 30 in the bore in a second direction orthogonal to the first direction. In the single-pawl embodiment of Fig. 4A, such movement of the stud in the bore is similarly restricted.

In the example shown in Fig. 4A, the difference between dimension G (width of wall 5 at the base of pawl 7) and dimension H (distance between the ends of inner wall 6) is made as small as possible. As a result, the circumference of the stud is closely surrounded by the inner wall 6 except where the pawl is mounted, and the inner wall 6 extends circumferentially around the stud to an extent that is sufficient to restrict lateral movement of the stud in the bore in the first direction.

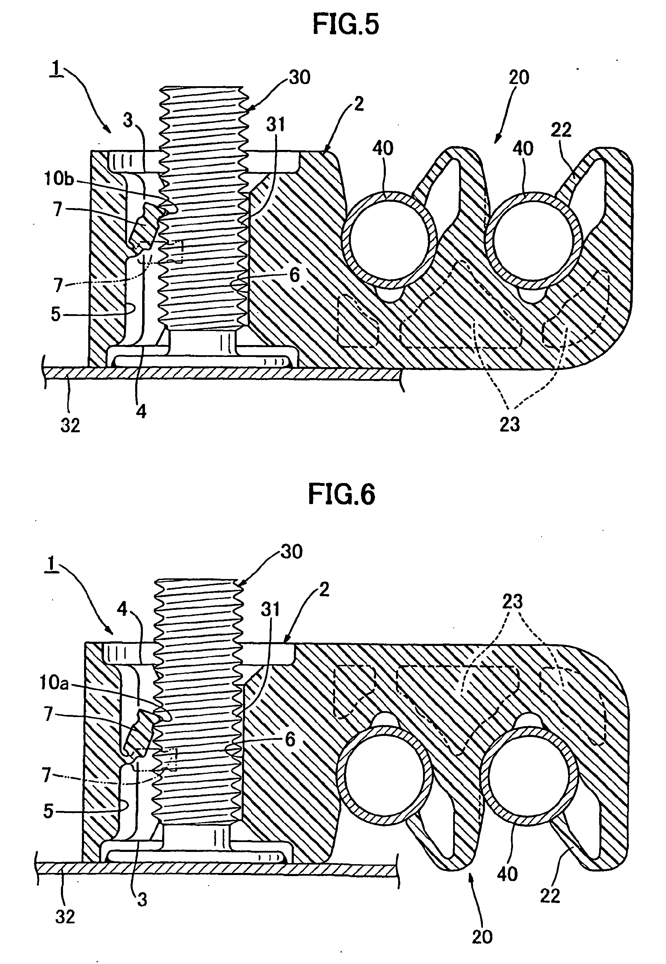

Fig. 5 is a cross-sectional view showing the device 1 in an embodiment of the present invention mounted on a stud 30 in one direction. The position of the pawl 7 before mounting is indicated by the dotted lines, and the position of the pawl 7 after mounting is indicated by the solid lines. When the stud 30 is inserted into the bore in the device 1, the pawl 7 is bent at the thin section and moves along the threads 31 of the stud 30. At the mounting position, the engaging section 10b on the pawl 7 and the threading groove 11b engage the threads 31 on the stud 30, and the device 1 is secured to the stud 30.

Components 40 such as pipes can be attached to the component mounting section 20 before the device 1 is mounted on the stud 30, or after the device 1 has been mounted on the stud 30.

Fig. 6 is a cross-sectional view of the device 1 mounted on a stud 30 in the opposite direction. When the stud 30 is inserted into the bore in the device 1, the pawl 7 is bent at the thin section in the direction opposite to that shown in Fig. 5 and moves along the threads 31 of the stud 30. At the mounting position, the engaging section 10a on the pawl 7 and the threading groove 11a engage threads 31 on the stud 30, and the device 1 is secured to the stud 30.

Again, components 40 such as pipes can be attached to the component mounting section 20 before the device 1 is mounted on the stud 30, or after the device 1 has been mounted on the stud 30.

The device in this embodiment of the present invention can be mounted on a stud from either direction and has the same mounting properties in both directions. Because the device has only a single pawl, a stud can be inserted into a bore of the device with little force, and when the stud is inserted, the pawl achieves an effective angle in the bore that does not vary. The arcuate threading grooves on the pawl assist the arcuate engaging sections of the pawl in engaging threads of a stud securely. By virtue of the fact that an inner wall of the bore closely surrounds the stud except for a region where the pawl is mounted, the amount of slippage of the stud in the bore is minimized, and the device of the invention can be reliably attached to a stud with a stable retention force.

While a preferred embodiment of the invention has been shown and described, it will be apparent that changes can be made without departing from the principles and spirit of the invention, the scope of which is defined in the accompanying claims. For example, while a preferred embodiment of the invention has an inner wall 6 that is continuous, the inner wall 6 might be somewhat discontinuous so long as it provides the lateral movement restricting functions of the continuous inner wall 6 shown in Fig. 4A.

## Claims

1. A device (1) to be fastened to a threaded stud (30), in particular for mounting a component on a threaded stud, comprising a body (2) having a bore for insertion of the stud and a single pawl (7) connected by a hinge (8) to a first inner wall (5) of the bore, wherein the pawl (7) has a centerline which, in the absence of a stud in the bore, extends in a first direction substantially perpendicular to the axis of the bore, wherein the pawl can be bent in opposite directions at the hinge for mounting the device on a stud from two directions, wherein a thread engaging section (10a) is formed at an end of the pawl opposite the hinge, the engaging section being disposed for entering a space between crests of threads (31) of a stud upon insertion of the stud in the bore, **characterized in that** the bore comprises a second inner wall (6) that extends continuously around the circumference of the bore except for the location of the first inner wall (5) to which the pawl (7) is attached by the hinge (8), wherein the radius of the second inner wall (6) is smaller than the radius of the first inner wall (5) and the second inner wall (6) is constructed to closely surround the stud and to minimize lateral movement of the stud in the first direction, and in a direction orthogonal to the first direction.

2. The device according to claim 1, wherein pair of thread engaging sections (10a, 10b) are formed at an end of the pawl (7) opposite the hinge (8), one or the other engaging section being disposed for entering a space between crests of threads (31) of a stud depending on the direction of insertion of the stud in the bore

3. The device according to claim 2, wherein a pair of grooves (11a, 11b) are formed adjacent to corresponding engaging sections (10a, 10b) of the pawl, each groove being disposed for receiving a crest of a thread adjacent to the space between crests.

4. A device according to anyone of the preceding claims, wherein the engaging section (10a, 10b) and the groove (11a, 11b) are formed on a section of the pawl (7) substantially thicker than a section of the pawl (7) forming the hinge (8).

5. The device according to anyone of the preceding claims, wherein the pawl has a flexible thin section (8) connected to the inner wall of the bore and a thick section (9) extending from the thin section.

6. The device according to claim 5, wherein the length of the thick section (9) of the pawl (7) is substantially greater than the distance between the inner wall (5) of the bore and a stud (30) inserted in the bore, and wherein after insertion of a stud in the bore, the centerline of the pawl forms an angle substantially less than 90° from the centerline of the pawl before insertion of a stud.

7. The device according to anyone of the preceding claims, wherein a tip of each engaging section (10a, 10b) is arcuate so as to conform to the curvature of the threads.

8. The device according to claim 3, wherein each groove (11a, 11b) is arcuate so as to conform to the curvature of the threads.

9. The device according to anyone of the preceding claims, wherein the centerline of the pawl (7) extends in a first direction substantially perpendicular to the axis of the bore before insertion of a stud in the bore and forms an angle of substantially less than 90° with respect to the first direction after insertion of the stud in the bore, and wherein the pawl (7) has a thread engaging section (10a) that enters a space between successive crests of threads of a stud and has an adjacent groove (11a) that receives one of the crests of the thread.

10. A device according to Claim 4, wherein there are a pair of the engaging sections and a pair of the grooves at opposite sides of the thicker section of the pawl, whereby an engaging section and a groove can engage threads of the stud irrespective of the direction of insertion of a stud into the bore.

11. A device according to anyone of the preceding claims, wherein the body includes a component mounting section for holding a component.

## Patentansprüche

1. Vorrichtung (1) zum Befestigen an einem Gewindebolzen (3), insbesondere zum Anbringen eines Bauelementes an einem Gewindebolzen, umfassend einen Körper (2), der eine Bohrung zum Einsetzen des Bolzens und eine einzige Sperrklinke (7) aufweist, die durch ein Gelenk (8) mit einer ersten Innenwand (5) der Bohrung verbunden ist, wobei die Sperrklinke (7) eine Mittellinie hat, die sich, wenn sich kein Bolzen in der Bohrung befindet, in einer ersten Richtung im Wesentlichen senkrecht zu der Achse der Bohrung erstreckt, wobei die Sperrklinke zum Montieren der Vorrichtung an einem Bolzen von zwei Richtungen aus in entgegengesetzten Richtungen an dem Gelenk gebogen werden kann, wobei ein gewindeeingreifender Abschnitt (10a) an einem dem Gelenk gegenüberliegenden Ende der Sperrklinke ausgebildet ist, wobei der eingreifende Abschnitt so angeordnet ist, daß er in einen Raum zwischen Gewindespitzen (31) eines Bolzens eintreten kann, wenn der Bolzen in die Bohrung eingesetzt wird, **dadurch gekennzeichnet, dass** die Bohrung eine zweite Innenwand (6) umfasst, die sich durchgehend um den Umfang der Bohrung erstreckt mit Ausnahme der Stelle an der ersten Innenwand (5), an der die Sperrklinke (7) durch das Gelenk (8) befestigt ist, wobei der Radius der zweiten Innenwand (6) kleiner ist als der Radius der ersten Innenwand (5) und die zweite Innenwand (6) so gestaltet ist, dass sie den Bolzen eng umgibt und die seitliche Bewegung des Bolzens in der ersten Richtung und in der Richtung senkrecht zur ersten Richtung minimiert.

2. Vorrichtung nach Anspruch 1, wobei ein Paar gewindeeingreifender Abschnitte (10a, 10b) an einem Ende der Sperrklinke (7) dem Gelenk (8) gegenüberliegend ausgebildet ist, wobei der eine oder der andere eingreifende Abschnitt so angeordnet ist, dass in einen Raum zwischen Gewindespitzen (31) eines Bolzens eintreten kann abhängig von der Einsetzrichtung des Bolzens in die Bohrung eingibt.

3. Vorrichtung nach Anspruch 2, wobei ein Paar Nuten (11a, 11b) angrenzend an die entsprechenden eingreifenden Abschnitten (10a, 10b) der Sperrklinke ausgebildet ist, wobei jede Nut so angeordnet ist, um eine Spitze eines Gewindes aufzunehmen, welchem dem Raum zwischen den Gewindespitzen benachbart ist.

4. Vorrichtung nach einem der vorhergehenden Ansprüche, wobei der eingreifende Abschnitt (10a, 10b) und die Nut (11a, 11b) an einem Abschnitt der Sperrklinke (7) ausgebildet sind, welcher im Wesentlichen dicker ist als ein Abschnitt der Sperrklinke (7), der das Gelenk (8) ausbildet.

5. Vorrichtung nach einem der vorhergehenden Ansprüche, wobei die Sperrklinke einen biegsamen dünnen Abschnitt (8) aufweist, der mit der Innenwand der Bohrung und einem dicken Abschnitt (9) verbunden ist, der sich von dem dünnen Abschnitt erstreckt.

6. Vorrichtung nach Anspruch 5, wobei die Länge des dicken Abschnitts (9) der Sperrklinke (7) im Wesentlichen größer ist als der Abstand zwischen der Innenwand (5) der Bohrung und einem in der Bohrung eingesetzten Bolzen (30) ist, und wobei nach dem Einsetzen eines Bolzens in die Bohrung die Mittellinie der Sperrklinke einen Winkel ausbildet, der wesentlich kleiner ist als 90° in Bezug auf die Mittellinie der Sperrklinke, bevor ein Bolzen eingesetzt wird.

7. Vorrichtung nach einem der vorhergehenden Ansprüche, wobei eine Spitze jedes eingreifenden Abschnitts (10a, 10b) gebogen ist, um sich der Biegung der Gewinde anzupassen.

8. Vorrichtung nach Anspruch 3, wobei jede Nut (11a, 11b) gebogen ist, um sich der Biegung der Gewinde anzupassen.

9. Vorrichtung nach einem der vorhergehenden Ansprüche, wobei sich die Mittellinie der Sperrklinke (7) in einer ersten Richtung im Wesentlichen senkrecht zu der Achse der Bohrung erstreckt, bevor ein Bolzen in die Bohrung eingesetzt ist, und nach Einsetzen des Bolzens in die Bohrung einen Winkel von wesentlich kleiner als 90° in Bezug auf die erste Richtung bildet, und wobei die Sperrklinke (7) einen gewindeeingreifenden Abschnitt (10a), der in einen Raum zwischen aufeinanderfolgenden Gewindespitzen eines Bolzens eintritt, und eine benachbarten Nut (11a) aufweist, die eine der Gewindespitzen aufnimmt.

10. Vorrichtung nach Anspruch 4, wobei ein Paar eingreifender Abschnitte und ein Paar Nuten an gegenüberliegenden Seiten des dickeren Abschnitts der Sperrklinke vorgesehen sind, wobei ein eingreifender Abschnitt und eine Nut unabhängig von der Einsetzrichtung eines Bolzens in der Bohrung in Eingriff treten können.

11. Vorrichtung nach einem der vorhergehenden Ansprüche, wobei der Körper einen Bauelementmontageabschnitt zum Halten eines Bauelementes aufweist.

## Revendications

1. Dispositif (1) destiné à être fixé à un goujon fileté (30), notamment pour le montage d'un composant sur un goujon fileté, comprenant un corps (2) possédant un perçage pour l'insertion du goujon et un seul cliquet (7) connecté par une charnière (8) à une première paroi intérieure (5) du perçage, dans lequel le cliquet (7) possède un axe central qui, en l'absence d'un goujon dans le perçage, s'étend dans une première direction sensiblement perpendiculaire à l'axe du perçage, et dans lequel le cliquet peut être coudé dans des directions opposées au niveau de la charnière pour le montage du dispositif sur le goujon depuis deux directions, dans lequel une section (10a) de mise en prise de filetage est formée au niveau d'une extrémité du cliquet à l'opposé de la charnière, la section d'engagement étant disposée de manière à pénétrer dans un espace situé entre les sommets du filetage (31) d'un goujon lors de l'insertion du goujon dans le perçage, **caractérisé en ce que** le perçage comprend une seconde paroi intérieure (6), qui s'étend continûment autour de la circonférence du perçage hormis à l'emplacement de la première paroi intérieure (5), à laquelle le cliquet (7) est fixé au moyen de la charnière (8), dans lequel le rayon de la seconde paroi intérieure (6) est inférieur au rayon de la première paroi intérieure (5), et la seconde paroi intérieure (6) est agencée de manière à entourer étroitement le goujon et à minimiser le déplacement latéral du goujon dans la première direction et dans une direction orthogonale à la première direction.

2. Dispositif selon la revendication 1, dans lequel une paire de sections (10a, 10b) de mise en prise de filetage sont formées sur une extrémité du cliquet (7) à l'opposé de la charnière (8), l'une ou l'autre des sections d'engagement étant disposée de manière à pénétrer dans un espace situé entre des sommets du filetage (31) d'un goujon en fonction de la direction d'insertion du goujon dans le perçage.

3. Dispositif selon la revendication 2, dans lequel une paire de gorges (11a, 11b) sont formées en position adjacente à des sections de mise en prise correspondantes (10a,10b) du cliquet, chaque gorge étant disposée de manière à recevoir un sommet d'un filetage adjacent à l'espace situé entre des sommets.

4. Dispositif selon l'une quelconque des revendications précédentes, dans lequel la section de mise en prise(10a,10b) et la gorge (11a,11b) sont formées dans une section du cliquet (7) nettement plus épaisse qu'une section du cliquet (7) formant la charnière (8).

5. Dispositif selon l'une quelconque des revendications précédentes, dans lequel le cliquet possède une section mince flexible (8) raccordée à la paroi intérieure du perçage, et une section épaisse (9) qui s'étend à partir de la section mince.

6. Dispositif selon la revendication 5, dans lequel la longueur de la section épaisse (9) du cliquet (7) est nettement supérieure à la distance entre la paroi intérieure (5) du perçage et un goujon (30) inséré dans le perçage, et dans lequel après l'insertion d'un goujon dans le perçage, l'axe central du cliquet fait un angle nettement inférieur à 90° par rapport à l'axe central du cliquet avant l'insertion d'un goujon.

7. Dispositif selon l'une quelconque des revendications précédentes, dans laquelle une pointe de chaque section de mise en prise (10a,10b) est courbe de manière à se conformer à la courbure du filetage.

8. Dispositif selon la revendication 3, dans lequel chaque rainure (11a, 11b) est courbe de manière à être conformée à la courbure du filetage.

9. Dispositif selon l'une quelconque des revendications précédentes, dans lequel l'axe central du cliquet (7) s'étend dans une première direction essentiellement perpendiculaire à l'axe du perçage avant l'insertion d'un goujon dans le perçage et fait un angle nettement inférieur à 90° par rapport à la première direction après l'insertion du goujon dans le perçage, et dans lequel le cliquet (7) possède une section (10a) de mise en prise de filetage qui pénètre dans un espace entre des sommets successifs du filetage d'un goujon et possède une gorge adjacente (11a) qui reçoit l'un des sommets du filetage.

10. Dispositif selon la revendication 4, dans lequel il existe une paire de sections de mise en prise et une paire de gorges sur des côtés opposés de la section plus épaisse du cliquet, ce qui a pour effet qu'une section d'engagement et une gorge peuvent se mettre en prise avec le filetage du goujon indépendamment de la direction d'insertion d'un goujon dans le perçage.

11. Dispositif selon l'une quelconque des revendications précédentes, dans lequel le corps inclut une section de montage de composant pour retenir un composant.
